Europäisches Patentamt

European Patent Office

Office européen des brevets

(19)

(11) Publication number: **0 293 761**
**A2**

(12) # EUROPEAN PATENT APPLICATION

(21) Application number: **88108412.3**

(22) Date of filing: **26.05.88**

(51) Int. Cl.4: **A01N 47/44 , A01N 25/06**

(30) Priority: **26.05.87 FI 872338**

(43) Date of publication of application:
**07.12.88 Bulletin 88/49**

(84) Designated Contracting States:
**AT BE CH DE ES FR GB GR IT LI LU NL SE**

(71) Applicant: **ALLPRO VENTURE OY**
**Hämeentie 157**
**SF-00560 Helsinki(FI)**

(72) Inventor: **Rikkonen Ari**
**Klanettitie 4 A 4**
**FI-00420 Helsinki(FI)**

(74) Representative: **Neidl-Stippler, Cornelia, Dr.**
**Rauchstrasse 2**
**D-8000 München 80(DE)**

(54) **Disinfecting agent and its use for disinfecting skin and surfaces of objects.**

(57) Disinfecting agent containing a hexamethylene biguanide salt, advantageously hydrochloride, and a lower ($C_2$ to $C_5$) alcohol, and in aerosol form.

EP 0 293 761 A2

# DISINFECTING AGENT AND ITS USE FOR DISINFECTING SKIN AND SURFACES OF OBJECTS

The present invention concerns a disinfecting agent and its use for disinfecting skin and surfaces of objects.

At present, various disinfectant solutions are used towards disinfecting skin and various surfaces, such as those of wash basins, toilet seats, desks and instruments. The object that has to be disinfected may be flushed with said solution, or e.g. a cotton swab is wetted with the solution, whereupon the object to be disinfected is swabbed with the cotton swab or cloth. The cloths may also be supplied, ready-wetted, in tightly sealed individual packages.

When flushing with disinfectant solution is being done, the solution is poured on the object to be disinfected; this involves consumption of large quantities of the solution, and solution may run into spaces surrounding the object, which may be harmful in certain instances. The objects to be disinfected may also be dipped in the disinfectant solution, in which case large quantities of solution are needed and the solution has to be frequently replaced in order to maintain the disinfecting capacity.

When various kinds of cloths are used in disinfection, clean cloths or cotton swabs must moreover be available, in addition to disinfectant solution, on which the solution may be poured. When wetted cloths and swabs are used, disinfection may be incomplete because it is not always possible to reach every point of the object to be disinfected with the cloth. In addition, some areas may inadvertently be left untouched.

The object of the present invention is to eliminate the above-mentioned drawbacks. It is a particular object of the invention to present a novel way of using a disinfecting agent formulation which is more efficient than before in the fighting of greatly different bacteria (gram-negative and gram-positive ones), yeast, moulds and fungi and with which disinfection of skin and of surfaces of objects will be easier and more efficient than before.

A particular object of the invention is to present a novel disinfecting agent formulation containing hexamethylene biguanide salt and which possesses better disinfecting properties than before.

Regarding the features which are characteristic of the invention, reference is made to the Claims.

The idea of the invention is that the disinfecting agent contains hexamethylene biguanide salt, e.g. polyhexamethylene biguanide salt, usually together with a lower ($C_1$ to $C_5$) alcohol, and that it is used in the form of a spray. The alcohol mixing proportion is e.g. 1:20 to 20:1, for instance 1:10 to 10:1. Polyhexamethylene biguanide, e.g. the hydrochloride, and a lower alcohol mixed therewith, e.g. methanol, ethanol, propanol, butanol and/or pentanol, have been found to possess particularly good disinfecting properties, that is, they act, in combination, not only on bacteria but also on fungi. Among the alcohols, isopropanol in particular is efficient.

Propane and/or butane admixed to the disinfecting agent boosts even further the disinfecting properties of the agent. Propane and/or butane may be used, for instance, with mixing proportion 1:20 to 20:1, e.g. 1:10 to 10:1.

It is easy and convenient to use a disinfecting agent in the form of spray as it is. The spray composed of minute atomized droplets penetrates efficiently to every point on the object to be disinfected. The disinfecting spray applied on the object in order to disinfect skin and surfaces of objects spreads uniformly, and in a thin layer, and efficiently destroys microorganisms and viruses, that is, bacteria and fungi, present on the object.

The hexamethylene biguanide salt used in the disinfecting agent is, for instance, in the form of a polyhexamethylene biguanide salt, e.g. its acetate, hydrochloride and/or gluconide, or another salt thereof.

The disinfecting spray of the invention may be used in institutions, such as hospitals, laboratories or equivalent, in connection with aseptic work to disinfect instruments and work sites, in households, and on journeys. With the disinfecting spray may be disinfected wash basins, dish-washing basins, table tops, toilet seats, etc. In addition, the disinfecting spray of the invention may be used to disinfect skin, e.g. hands and points of puncture. The disinfecting agent is selected in accordance with the particular application. When required, the disinfecting agent may be wiped off from the object after spraying.

The spray of the invention is advantageous in use because it is possible to spray on the object exactly the appropriate quantity of disinfecting agent and nothing is wasted. In addition, the desired object can be completely disinfected with said spray because the spray will penetrate and reach every point. When desired, the deposition area of the spray can be regulated by the aid of the distance between the spray bottle and the object to be disinfected.

The invention is described in the following in detail with the aid of an embodiment example.

Example

For disinfecting agent is used polyhexamethylene-biguanide chloride, which is packaged together with a suitable driver gas in aerosol bottles.

The disinfecting spray of the invention thus obtained possesses an effect destroying bacteries, viruses, fungi and microorganisms and inhibiting their growth:

Table 1:

Bacteriostatic effect

Staphylococcus aureus      20 ppm 1: 50,000
Streptococcus faecalis      5 ppm 1:200,000
Proteus vulgaris      250 ppm 1: 4,000
Eschericia coli      20 ppm 1: 50,000
Salmonella typhi      5 ppm 1:200,000
Pseudomonas pyocyanea      100 ppm 1: 10,000
Saccharomyces cerevisiae      25 ppm 1: 40,000
Saccharomyces ellipsoideus      25 ppm 1: 40,000
Saccharomyces turbidans      25 ppm 1: 40,000

Bactericidal effect (3 min.)

Staphylococcus aureus      1: 1,000
Eschericia coli      1: 2,000
Pseudomonas aeruginosa      1: 1,000
Saccharomyces cerevisiae      1: 400

Fungistatic effect

Aspergillus niger      1: 100
Penicillium notatum      1: 100
Ceratocystis pilifera      1: 100

Example 2:

The effect of disinfecting agent according to the invention, containing polyhexamethylene biguanide chloride, isopropanol and propane/butane mixture, as well as ion exchange water, was tried out in 1:10 aqueous dilution on certain microbes. In the experiment a 3 ml sample was used, to which was added 1.0 ml of microbe suspension, at the temperature of the standing room, observation after 10 s, 30 s, 1 min, and 5 min. (0.1 ml sample drawn and pipetted into 9 ml of tryptic broth). Incubation Aspergillus niger 5 days, others 1 day, whereafter followed naked eye observation to see whether there was any observable microbial growth or whether the active agent in the sample had destroyed the microbial flora. The results are presented in Table 2.

3

Table 2:

| Test organism | Sample | Action Period | | | |
|---|---|---|---|---|---|
| | | 10 s | 30 s | 1 min. | 5 min. |
| Staphylococcus aureus | Dil. 1:10 | - | - | - | - |
| Escherichia coli | Dil. 1:10 | - | - | - | - |
| Pseudomonas aeruginosa | Dil. 1:10 | - | - | - | - |
| Candida albicans | Dil. 1:10 | + | + | + | + |
| Aspergillus niger | Dil. 1:10 | + | + | + | + |
| - : No microbial growth | | | | | |
| + : Microbial growth | | | | | |

Example 3:

The purpose of this experiment was to establish the efficiency of the disinfecting agent of Example 2, and of the aerosol prepared of it, in destroying the clinically important yeast Candida albicans and the dermatocyte Trichophyton mentagrophytes, of these being prepared a water suspension; they were tested as follows.

PDM test:

Microsuspension was spread on PDA (potato/dextrose/agar) dishes, 0.1 ml. After being left to stand for 30 min., paper disks were placed on the agar surfaces, which had been wetted with a 5, 10, 20 or 100-fold dilution of the disinfecting agent.

Tube test:

For determination of the dying time, aqueous dilutions of the active agent were inoculated with microbe suspension. The reference tube contained water only. From the tubes kept at room temperature, 0.1 ml were transferred at predetermined intervals onto PDA dishes. After waiting for 30 min., the dishes were sprayed with the disinfecting agent, according to a fixed time-table. Incubation of all cultivated PDA dishes took place at +30° C.

Test 1:

The active agent dilutions were 5, 10, 20 and 100-fold. Inoculations of PDA dishes were made 3, 10 and 20 min. after microbe addition. Sprays were applied 30 min. and 30 min + 1 day after inoculation.

Candida albicans:

PDA: No observable effect
Spray: Effect observable after 2 sprayings; one single spraying did not reduce the growth.
Tube: 5 to 20-fold dilutions 100% effective with 3 min. action time already; with 100/fold dilution some growth occurred after 3 min., but no longer after 10 min.

Trichophyton mentagrophytes:

PDA: No observable effect
Spray: 100% effect observable after 2 sprayings; even one spraying reduced the growth.
Tube: 100% effect with all dilutions after 3 min. already.


Test 2:

The effect dilutions were 100, 1000 and 10,000-fold. The samples were transferred onto dishes 5, 8, 16 and 3 min. after microbe addition. Sprays were applied 60 (1x), 60 + 120 (2x), 60 + 120 + 180 (3x) and 60 + 120 + 180 + 240 (4x) min. after cultivation.


Candida albicans:

Tube: 100-fold dilution 100% efficient already after 3 min.; no observable destruction was obtained within 30 min. with the other two dilutions.
Spray: Complete destruction was observable only after 4 sprayings.


Trichophyton mentagrophytes:

Tube: 100% dilution efficient already after 3 min.; no observable destruction obtained within 3 min. with the other two dilutions.
Spray: 100% efficient already after the second spraying; even one spraying had a clear growth-reducing effect.

The disinfecting aerosol of the invention, that is the spray, may be packaged together e.g. with a driving agent known in itself in the art, or without driving agent, in which case the disinfecting agent is sprayed from the bottle e.g. by pumping.

The embodiment example is only intended to illustrate the invention, without confining it in any way whatsoever.


**Claims**

1. Disinfecting agent, characterized in that it contains a hexamethylene biguanide salt, advantageously hydrochloride, and a lower ($C_1$ to $C_5$) alcohol, and that the disinfecting agent is in aerosol form.

2. Disinfecting agent according to claim 1, characterized in that it contains propane and/or butane.

3. Disinfecting agent according to claim 1 or 2, characterized in that it contains water at diluting proportion 1:1 to 5:1 to 1000:1, suitably 5:1 to 100:1.

4.. The use of a disinfecting agent for disinfecting skin and surfaces of objects, characterized in that the disinfecting agent is used in the form of a spray.